# EUROPEAN PATENT APPLICATION

(11) **EP 3 496 033 A1**
(43) Date of publication of application: **12.06.2019**
(21) Application number: 17858548.5
(22) Date of filing: 09.10.2017
(51) Int. Cl.: G06T 7/00

(54) **TRAVEL ASSISTANCE DEVICE AND COMPUTER PROGRAM**

(30) Priority: 07.10.2016 JP 2016199254
(71) Applicant: Aisin Aw Co., Ltd., Anjo-shi, Aichi 444-1192 (JP)
(72) Inventor: SAKAI, Takamitsu, Anjo-shi Aichi 444-1192 (JP); HIROTA, Tomoaki, Anjo-shi Aichi 444-1192 (JP)
(74) Representative: Cabinet Beau de Loménie
(86) International application number: PCT/JP2017/036562
(87) International publication number: WO 2018/066712

(57) **Abstract**

There is provided a travel assistance device and a computer program that enable to more accurately determine a risk factor present in the surrounding environment of a mobile unit. Specifically, the configuration is such that a captured image 51 that captures the surrounding environment of a vehicle is obtained, a map information image 52 which is a map image that three-dimensionally represents a map and that represents the same range as an image capturing range of the captured image from the same direction as an image capturing direction of the captured image is obtained, and a risk factor that is present in the surrounding environment of the vehicle and that is not included in the captured image is extracted based on learning data by inputting the captured image and the map information image to machine learning as input images with a plurality of channels.

## Description

### TECHNICAL FIELD

The present invention relates to a travel assistance device and a computer program that provide travel assistance for a mobile unit.

### BACKGROUND ART

In recent years, for example, as one type of travel assistance for a mobile unit such as a vehicle, travel assistance has been performed in which a risk factor present around the mobile unit is extracted and guidance on the extracted risk factor is provided. The risk factor is a factor to which attention is to be paid when the mobile unit travels, and includes, for example, an obstacle such as another vehicle and a pedestrian, a road sign for a crossroad, a crosswalk, etc., a section where a lane increases or decreases, and the entrance of a building facing a road, which are present in locations where it is difficult to visually identify them from the mobile unit (the same hereinafter). For means for determining a risk factor such as those described above, for example, it is possible to make a determination by comparing the current location and orientation of the mobile unit with map information, or make a determination using a camera, a sensor, or a communication device installed on the mobile unit.

For example, JP 2012-192878 A discloses that during traveling of a vehicle, the locations and movement speeds of obstacles such as other vehicles present around the vehicle are detected in real time using a camera, a sensor, and a communication device installed on the vehicle, and when it is determined that the vehicle has a blind spot region and the risk level of the blind spot region is high, driving assistance for avoiding an obstacle present in the blind spot region is provided.

### CITATIONS LIST

### PATENT LITERATURE

Patent Literature 1: JP 2012-192878 A (pp. 8-11)

### SUMMARY OF INVENTION

### TECHNICAL PROBLEMS

However, in the above-described Patent Literature 1, though a blind spot region is determined in a bird's-eye view manner based on a positional relationship between a vehicle and another vehicle, a surrounding environment that can be actually visually identified by a driver is not considered, and thus, there has been a case in which a region determined to be a blind spot region differs from an actual driver's blind spot region. In addition, although the risk level of a blind spot region is determined by the behaviors of a preceding vehicle and an oncoming vehicle, even if the preceding vehicle or oncoming vehicle exhibits a behavior that is determined to be high in risk level, it has been difficult to accurately determine whether the blind spot region is actually risky. Thus, there is a possibility that a blind spot region that does not serve as a risk factor is also determined to be a risk factor and thus serves as an assistance target.

The present invention is made to solve the above-described conventional problem, and provides a travel assistance device and a computer program that enable to more accurately determine a risk factor present in the surround environment of a mobile unit.

### SOLUTIONS TO PROBLEMS

To provide the above-described travel assistance device, a travel assistance device according to the present invention includes: surrounding environment imaging means for obtaining a captured image that captures a surrounding environment of a mobile unit; map information image obtaining means for obtaining, as a map information image, a map image that three-dimensionally represents a map and that represents a same range as an image capturing range of the captured image from a same direction as an image capturing direction of the captured image; and risk factor extracting means for extracting a risk factor based on learning data by inputting the captured image and the map information image to machine learning as input images with a plurality of channels, the risk factor being present in the surrounding environment of the mobile unit and being not included in the captured image.

Note that the "mobile unit" is not limited to a vehicle and may be any as long as the mobile unit is one that moves on a road such as a pedestrian or a bicycle.

Note also that the "risk factor" is a factor to which attention is to be paid when the mobile unit travels, and includes, for example, an obstacle such as another vehicle and a pedestrian, a road sign for a crossroad, a crosswalk, etc., a section where a lane increases or decreases, and the entrance of a building facing a road, which are present in locations where it is difficult to visually identify them from the mobile unit (the same hereinafter).

In addition, a computer program according to the present invention is a program that provides travel assistance for a mobile unit. Specifically, the computer program causes to function as: surrounding environment imaging means for obtaining a captured image that captures a surrounding environment of a mobile unit; map information image obtaining means for obtaining, as a map information image, a map image that three-dimensionally represents a map and that represents a same range as an image capturing range of the captured image from a same direction as an image capturing direction of the captured image; and risk factor extracting means for extracting a risk factor based on learning data by inputting the captured image and the map information image to machine learning as input images with a plurality of channels, the risk factor being present in the surrounding environment of the mobile unit and being not included in the captured image.

### ADVANTAGEOUS EFFECTS OF INVENTION

According to the travel assistance device and computer program according to the present invention that have the above-described configurations, by inputting a map image that three-dimensionally represents a map and a captured image of an area around a mobile unit to machine learning as input images with a plurality of channels, it becomes possible to more accurately determine a risk factor present in the surrounding environment of the mobile unit based on learning data.

### BRIEF DESCRIPTION OF DRAWINGS

FIG. 1 is a block diagram showing a navigation device according to the present embodiment.
FIG. 2 is a flowchart of a machine learning processing program according to the present embodiment.
FIG. 3 is a diagram showing an image capturing range of a captured image.
FIG. 4 is a diagram showing a map information image created based on a captured image.
FIG. 5 is a diagram describing an example of machine learning performed on images.
FIG. 6 is a diagram for comparison between the captured image and the map information image.
FIG. 7 is a flowchart of a risk factor determination processing program according to the present embodiment.

### DESCRIPTION OF EMBODIMENTS

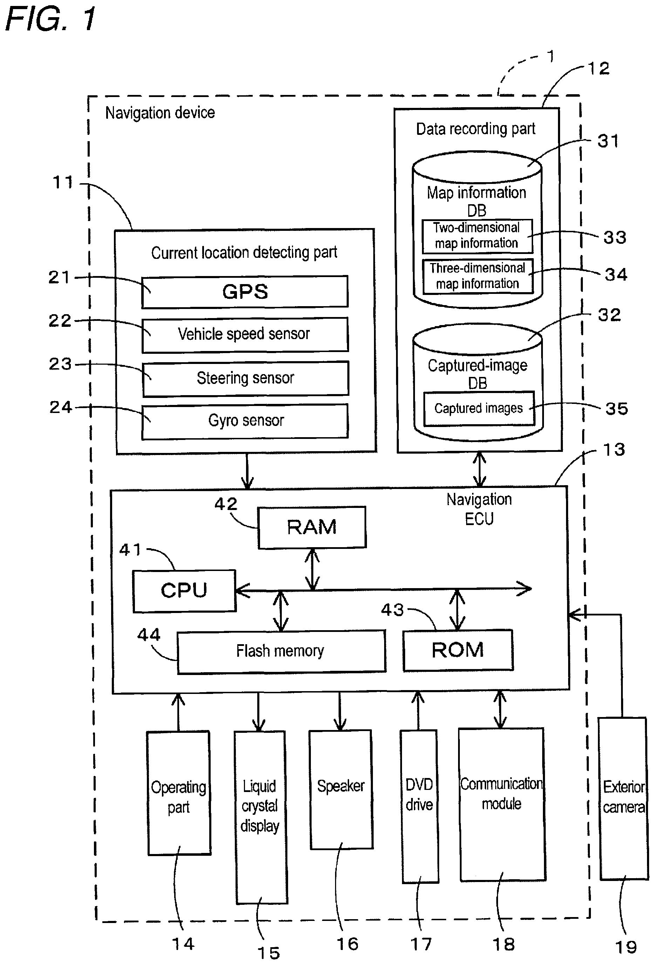

A travel assistance device according to the present invention will be described in detail below based on one embodiment that embodies a navigation device and with reference to the drawings. First, a schematic configuration of a navigation device 1 according to the present embodiment will be described using FIG. 1. FIG. 1 is a block diagram showing the navigation device 1 according to the present embodiment.

As shown in FIG. 1, the navigation device 1 according to the present embodiment includes a current location detecting part 11 that detects a current location of a vehicle having the navigation device 1 mounted thereon; a data recording part 12 having various types of data recorded therein; a navigation ECU 13 that performs various types of arithmetic processing based on inputted information; an operating part 14 that accepts operations from a user; a liquid crystal display 15 that displays a map of an area around the vehicle, information about a guided route set on the navigation device 1, etc., to the user; a speaker 16 that outputs audio guidance on route guidance, an alert against risk factors, etc.; a DVD drive 17 that reads a DVD which is a storage medium; and a communication module 18 that performs communication with information centers such as a probe center and a VICS (registered trademark: Vehicle Information and Communication System) center. In addition, an exterior camera 19 installed on the vehicle having the navigation device 1 mounted thereon is connected to the navigation device 1 through an in-vehicle network such as a CAN.

Each component included in the navigation device 1 will be described below in turn.

The current location detecting part 11 includes a GPS 21, a vehicle speed sensor 22, a steering sensor 23, a gyro sensor 24, etc., and can detect the current location, orientation, and travel speed of the vehicle, the current time, etc. Here, particularly, the vehicle speed sensor 22 is a sensor for detecting the movement distance and vehicle speed of the vehicle, and generates pulses according to the rotation of drive wheels of the vehicle and outputs a pulse signal to the navigation ECU 13. Then, the navigation ECU 13 counts the generated pulses and thereby calculates the rotational speed of the drive wheels and a movement distance. Note that the navigation device 1 does not need to include all of the above-described four types of sensors and may be configured to include only one or a plurality of types of sensors among those sensors.

In addition, the data recording part 12 includes a hard disk (not shown) serving as an external storage device and a recording medium; and a recording head (not shown) which is a driver for reading a map information DB 31, a captured-image DB 32, a predetermined program, etc., recorded on the hard disk, and writing predetermined data to the hard disk. Note that the data recording part 12 may include a memory card or an optical disc such as a CD or a DVD instead of the hard disk. Note also that the map information DB 31 and the captured-image DB 32 may be stored on an external server, and the navigation device 1 may obtain the map information DB 31 and the captured-image DB 32 by communication.

Here, the map information DB 31 stores therein each of two-dimensional map information 33 and a three-dimensional map information 34. The two-dimensional map information 33 is general map information used in the navigation device 1 and includes, for example, link data about roads (links), node data about node points, facility data about facilities, search data used in a route search process, map display data for displaying a map, intersection data about each intersection, and retrieval data for retrieving points.

On the other hand, the three-dimensional map information 34 is information about a map image that three-dimensionally represents a map. Particularly, in the present embodiment, the three-dimensional map information 34 is information about a map image that three-dimensionally represents road outlines. Note that the map image may also represent other information than road outlines. For example, the map image may also three-dimensionally represent the shapes of facilities, the section lines of roads, road signs, signs, etc.

The navigation device 1 performs general functions such as display of a map image on the liquid crystal display 15 and a search for a guided route, using the two-dimensional map information 33. In addition, as will be described later, a process related to a determination of a risk factor is performed using the three-dimensional map information 34.

In addition, the captured-image DB 32 is storage means for storing captured images 35 captured by the exterior camera 19. Note that the captured images 35 captured by the exterior camera 19 are cumulatively stored in the captured-image DB 32 and are deleted in turn from the old ones.

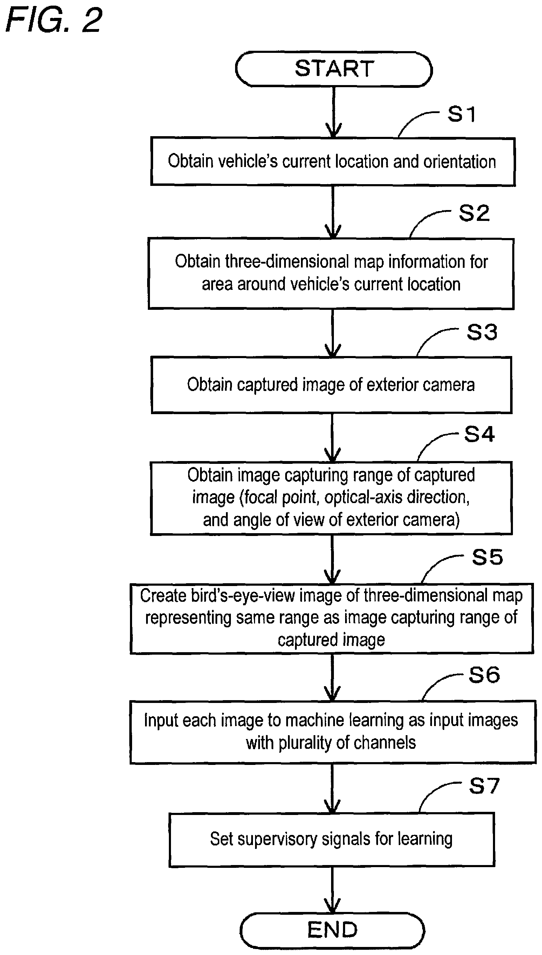

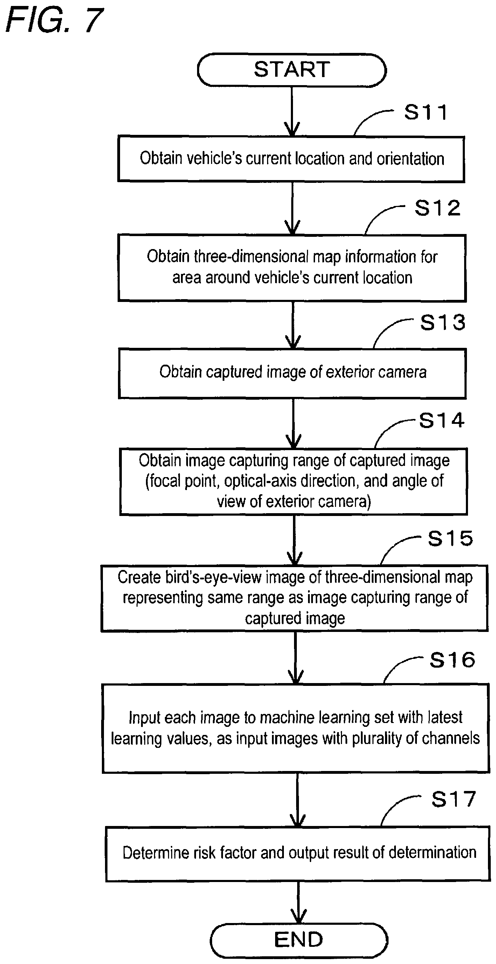

Meanwhile, the navigation ECU (electronic control unit) 13 is an electronic control unit that performs overall control of the navigation device 1, and includes a CPU 41 serving as a computing device and a control device; and internal storage devices such as a RAM 42 that is used as a working memory when the CPU 41 performs various types of arithmetic processing and that stores route data obtained when a route is searched for, etc., a ROM 43 having recorded therein a machine learning processing program (see FIG. 2) and a risk factor determination processing program (see FIG. 7) which will be described later, etc., in addition to a program for control, and a flash memory 44 that stores a program read from the ROM 43. Note that the navigation ECU 13 includes various types of means serving as processing algorithms. For example, surrounding environment imaging means obtains a captured image that captures the surrounding environment of the vehicle. Map information image obtaining means obtains, as a map information image, a map image that represents three-dimensional map information 34 of the same range as an image capturing range of the captured image from the same direction as an image capturing direction of the captured image. Risk factor extracting means extracts, based on learning data, a risk factor that is present in the surrounding environment of the vehicle and that is not included in the captured image, by inputting the captured image and the map information image to machine learning as input images with a plurality of channels.

The operating part 14 is operated when, for example, a point of departure serving as a travel start point and a destination serving as a travel end point are inputted, and includes a plurality of operating switches such as various types of keys and buttons (not shown). Based on switch signals outputted by, for example, pressing each switch, the navigation ECU 13 performs control to perform corresponding various types of operation. Note that the operating part 14 may include a touch panel provided on the front of the liquid crystal display 15. Note also that the operating part 14 may include a microphone and an audio recognition device.

In addition, on the liquid crystal display 15 there are displayed a map image including roads, traffic information, operation guidance, an operation menu, guidance on keys, a guided route set on the navigation device 1, guidance information according to the guided route, news, a weather forecast, time, an e-mail, a TV program, etc. Note that a HUD or an HMD may be used instead of the liquid crystal display 15. In addition, in the present embodiment, particularly, guidance on a result of a determination of a risk factor is also displayed.

In addition, the speaker 16 outputs audio guidance that provides guidance on travel along a guided route or guidance on traffic information, based on an instruction from the navigation ECU 13. In addition, in the present embodiment, particularly, guidance on a result of a determination of a risk factor is also outputted.

In addition, the DVD drive 17 is a drive that can read data recorded on a recording medium such as a DVD or a CD. Then, based on the read data, for example, music or video is played back or the map information DB 31 is updated. Note that a card slot for performing reading and writing on a memory card may be provided instead of the DVD drive 17.

In addition, the communication module 18 is a communication device for receiving traffic information transmitted from traffic information centers, e.g., a VICS center and a probe center, and corresponds, for example, to a mobile phone or a DCM.

In addition, the exterior camera 19 is composed of, for example, a camera using a solid-state imaging device such as a CCD, and is attached to the back of a vehicle's rearview mirror, a vehicle's front bumper, etc., and is placed such that an optical-axis direction is downward at a predetermined angle relative to the horizontal. The exterior camera 19 captures an image of the surrounding environment ahead in a vehicle's traveling direction. In addition, the navigation ECU 13, as will be described later, determines a risk factor present around the vehicle, by inputting a captured image having been captured together with an image of the three-dimensional map information 34 to machine learning as input images with a plurality of channels. Note that the exterior camera 19 may be configured to be also disposed on the side or rear of the vehicle. In addition, it is desirable to make an adjustment such that the placement position of the exterior camera 19 is substantially the same as a driver's eye position (a start point of the line of sight) and the optical-axis direction is substantially the same as a driver's normal line-of-sight direction. By doing so, an image captured by the exterior camera 19 matches the driver's field of vision, enabling to more appropriately determine a risk factor.

The above-described risk factor determined by machine learning in the navigation device 1 according to the present embodiment is a factor to which attention is to be paid (guidance on which is to be provided) when the vehicle travels. The risk factor includes, for example, an obstacle such as another vehicle and a pedestrian, a road sign for a crossroad, a crosswalk, etc., a section where a lane increases or decreases, and the entrance of a building facing a road, which are present in locations where it is difficult to visually identify them from the vehicle (the same hereinafter). For example, the "entrance of a building facing a road" is a point where a pedestrian may possibly newly appear on the road, and is a location to which attention is to be paid when the vehicle travels. In addition, the "section where a lane increases or decreases" is a point where another vehicle may possibly change its lane, and is a location to which attention is to be paid when the vehicle travels.

Note that in the present embodiment, as described above, the three-dimensional map information 34 is information about a map image that three-dimensionally represents particularly road outline lines. Thus, a risk factor that serves as a determination target by inputting a map image of the three-dimensional map information 34 to machine learning is a factor related to a road, e.g., a "crossroad present in a location where it is difficult to visually identify it from the vehicle". Note, however, that by increasing the number of pieces of information to be included in the three-dimensional map information 34, risk factors of other types can also serve as determination targets. For example, by including information on section lines in the three-dimensional map information 34, a "section where a lane increases or decreases and which is present in a location where it is difficult to visually identify it from the vehicle" serves as a determination target for a risk factor. Furthermore, by including information on the shapes of facilities in the three-dimensional map information 34, an "entrance of a building facing a road that is present in a location where it is difficult to visually identify it from the vehicle" serves as a determination target for a risk factor.

Next, a machine learning processing program executed by the CPU 41 in the navigation device 1 according to the present embodiment that has the above-described configuration will be described based on FIG. 2. FIG. 2 is a flowchart of the machine learning processing program according to the present embodiment. Here, the machine learning processing program is a program that is executed after turning on a vehicle's ACC, and sets supervisory signals for learning (correct values) used upon performing machine learning for determining a risk factor based on a captured image captured by the exterior camera 19 and the three-dimensional map information 34. Note that the machine learning processing program (FIG. 2) is executed in parallel with a risk factor determination processing program (FIG. 7) for determining a risk factor which will be described later. Namely, while a risk factor is determined by the risk factor determination processing program (FIG. 7), more appropriate supervisory signals for learning (correct values) for determining a risk factor are set by the machine learning processing program (FIG. 2). In addition, the programs shown in the following flowcharts of FIGS. 2 and 7 are stored in the RAM 42, the ROM 43, etc., included in the navigation ECU 13, and executed by the CPU 41.

First, in the machine learning processing program, at step (hereinafter, abbreviated as S) 1, the CPU 41 obtains a vehicle's current location and orientation based on results of detection by the current location detecting part 11. Specifically, positional coordinates on a map that indicate a vehicle's current location are obtained using the two-dimensional map information 33. Note that upon detection of a vehicle's current location, a map-matching process for matching the vehicle's current location to the two-dimensional map information 33 is also performed. Furthermore, the vehicle's current location may be identified using a high-accuracy location technique. Here, the high-accuracy location technique is a technique enabling to detect a travel lane or a high-accuracy vehicle location by detecting, by image recognition, white line and road surface painting information captured from a camera at the rear of the vehicle and further checking the white line and road surface painting information against a map information DB stored in advance. Note that the details of the high-accuracy location technique are already publicly known and thus are omitted. Note that it is desirable that the vehicle's current location and orientation be ultimately identified on a map of the three-dimensional map information 34.

Then, at S2, the CPU 41 obtains particularly three-dimensional map information 34 for an area around the vehicle's current location which is identified at the above-described S1 (e.g., an area within 300 m from the vehicle's current location) among the three-dimensional map information 34 stored in the map information DB 31.

Subsequently, at S3, the CPU 41 obtains a captured image captured recently by the exterior camera 19 from the captured-image DB 32. Note that the captured image captured by the exterior camera 19 is an image that captures the environment ahead in a vehicle's traveling direction, i.e., the environment ahead visually identified by the driver (driver's field of vision), to correspond to a start point of a driver's line of sight (eye point) and a driver's line-of-sight direction.

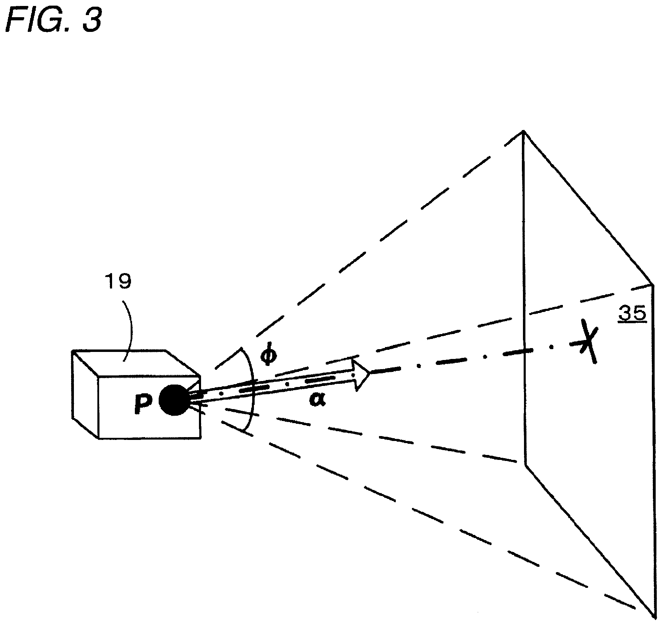

Thereafter, at S4, the CPU 41 obtains an image capturing range of the captured image obtained at the above-described S3. Here, as shown in FIG. 3, the image capturing range of a captured image 35 can be identified by the position of a focal point P, an optical-axis direction α, and the angle of view φ of the exterior camera 19 obtained at the point in time of image capturing. Note that the angle of view φ is a fixed value which is determined in advance by the exterior camera 19. On the other hand, the position of the focal point P is determined based on the vehicle's current location obtained at the above-described S1 and the placement position of the exterior camera 19 on the vehicle. In addition, the optical-axis direction α is determined based on the vehicle's orientation obtained at the above-described S1 and the placement direction of the exterior camera 19 on the vehicle.

Then, at S5, the CPU 41 creates a bird's-eye-view image (hereinafter, referred to as a map information image) that three-dimensionally represents a map of the same range as the image capturing range of the captured image obtained at the above-described S4 from the same direction as an image capturing direction of the captured image, using the three-dimensional map information 34 obtained at the above-described S2. Note that the map information image itself is a two-dimensional image which is the same as the captured image.

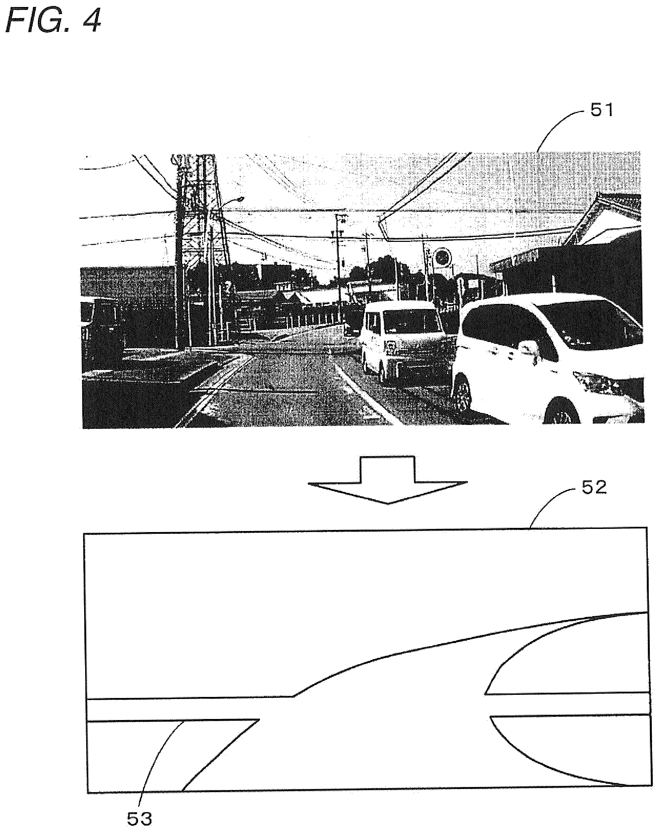

Here, FIG. 4 is a diagram showing an example of a map information image 52 created for a captured image 51. As shown in FIG. 4, the map information image 52 is an image in which lines indicating outlines 53 of roads included in an image capturing range of the captured image 51 (i.e., in the driver's field of vision) are drawn. In the map information image 52 there is also drawn an outline of a road which is hidden in the captured image 51 by obstacles such as other vehicles.

Thereafter, at S6, the CPU 41 inputs the captured image obtained at the above-described S3 and the map information image created at the above-described S5 to machine learning as input images with a plurality of channels. In addition, since the captured image is inputted to the machine learning as three-channel input images represented by three RGB colors, respectively, four-channel input images including the map information image are inputted. Note that in the present embodiment, particularly, machine learning (deep learning) using a convolutional neural network with a multilayer structure is used.

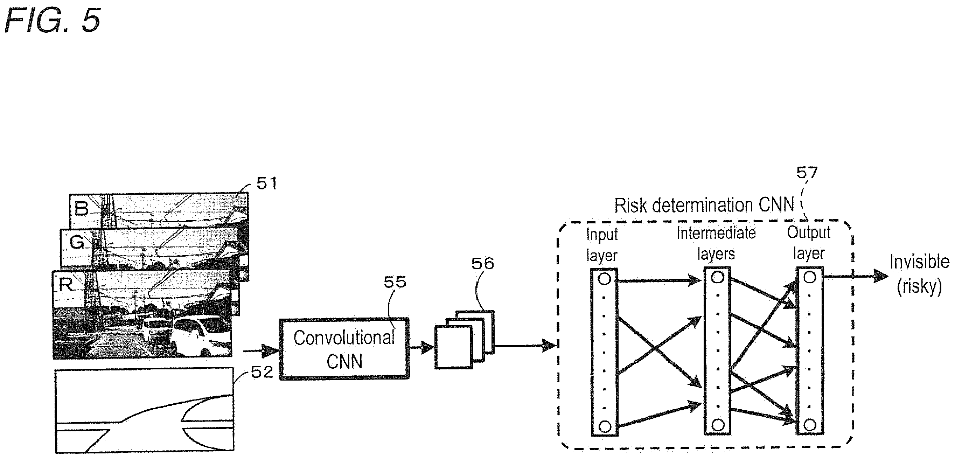

As shown in FIG. 5, when captured images 51 represented by the three RGB colors, respectively, and a map information image 52 are inputted to a learning model as four-channel input images, first, image processing based on a convolutional neural network (hereinafter, referred to as convolutional CNN) 55 is performed. The convolutional CNN 55 repeats a 'convolutional layer' and a 'pooling layer' a plurality of times, and thereby outputs particularly important feature maps 56 for determining a risk factor.

In addition, the 'convolutional layer' is a layer for filtering (convoluting) an inputted image. By the convolution of an image, patterns (features) in the image can be detected. In addition, there are a plurality of convolutional filters. By providing a plurality of filters, it becomes possible to capture various features in the inputted image. In addition, by filtering, the size of an image to be outputted is reduced. The outputted image is also called a feature map. In addition, filters used in the convolutional layer do not need to be set by a designer, and can be obtained by learning. Note that as learning proceeds, filters suitable for extraction of particularly important features for determining a risk factor are set. Supervisory signals for learning (correct values) which are set by the machine learning processing program also include the above-described filters.

On the other hand, the 'pooling layer' is placed immediately after the convolutional layer and reduces the positional sensitivity of an extracted feature. Specifically, by coarsely resampling a convolution output, a difference caused by some image shift is absorbed. In the pooling layer, too, the size of an output image is reduced compared to an input image.

Then, after repeating the above-described 'convolutional layer' and 'pooling layer' a plurality of times, a fully-connected multilayer perceptron is finally outputted. The multilayer perceptron is one-dimensional vector data.

Thereafter, the fully-connected multilayer perceptron outputted from the convolutional CNN 55 is inputted to an input layer of a neural network for determining a risk factor (hereinafter, referred to as risk determination CNN) 57. Then, the risk determination CNN 57 inputs data obtained by multiplying each neuron by a weight (weight coefficient) which is output data having been subjected to a process in the input layer, to next intermediate layers. Then, in the intermediate layers, too, likewise, data obtained by multiplying each neuron by a weight (weight coefficient) which is output data having been subjected to a process in the intermediate layers is inputted to a next output layer. Then, in the output layer, a final determination of a risk factor is made using the data inputted from the intermediate layers, and a result of the determination (i.e., an extracted risk factor) is outputted. Note that in the risk determination CNN 57, as learning proceeds, the above-described weights (weight coefficients) change as appropriate to more suitable values and are set. In the present embodiment, particularly, a first intermediate layer is a layer for detecting the locations and motions of objects present in a risk determination area, a second intermediate layer is a layer for recognizing the detected locations and motions of the objects as a vehicle's surrounding situation (scene), and the output layer is a layer for determining a risk factor from the vehicle's surrounding situation (scene). The supervisory signals for learning (correct values) which are set by the machine learning processing program also include the above-described weights (weight coefficients).

In addition, particularly, in the present embodiment, by inputting the captured image 51 and the map information image 52 which are input targets in an overlapping manner using the same channel, it becomes possible to easily identify correlation between identical pixels (i.e., the same area around the vehicle), i.e., a differential area having differences between the captured image and the map information image. The CPU 41 estimates the differential area having differences between the captured image and the map information image to be an area that has a target which is present in the map image but has disappeared (has not been captured) in the captured image for some reason, and that is a blind spot for an occupant of the vehicle. Therefore, by determining a risk factor particularly from feature portions extracted in the differential area by machine learning, it becomes possible to further reduce a process related to the determination of a risk factor. Note that the feature portions extracted by machine learning include an object that is included in the map information image but is not included in the captured image, i.e., an object that is present in the driver's field of vision but cannot be visually identified.

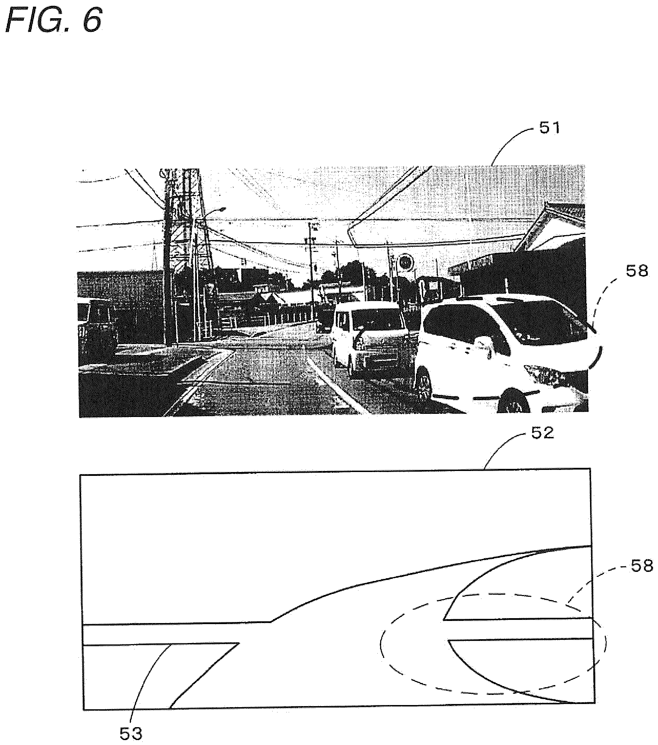

For example, when a captured image 51 (in practice, three images represented by RGB) and a map information image 52 which are shown in FIG. 6 are inputted to machine learning, a part of a road outline present in the map information image 52 disappears in the captured image 51 due to other vehicles. Namely, in an example shown in FIG. 6, an area enclosed by a broken line is a differential area 58. In addition, the above-described feature portions extracted by machine learning are other vehicles that cover road outline lines and the disappeared outline lines. Since the feature portions are present in the differential area 58, by allowing the differential area 58 to be easily identified, it becomes possible to facilitate a process related to the extraction of the above-described feature portions. Therefore, for example, when a candidate for a risk factor such as a crossroad that cannot be visually identified by the driver is present in the differential area 58, it becomes easier to determine the crossroad as a risk factor by machine learning. Note that although in the example shown in FIG. 6 the road outline lines disappear from the captured image 51 due to other vehicles, the road outline lines may also disappear due to a building, etc., in addition to other vehicles.

Thereafter, at S7, the CPU 41 sets supervisory signals for learning (correct values) which are learning data, based on learning results obtained at the above-described S6. Note that the supervisory signals for learning include, as described above, filters used in the convolutional layer and weights (weight coefficients) used in the risk determination CNN 57. As a result, by repeatedly executing the machine learning processing program, filters suitable for extraction of particularly important features for identifying a risk factor are set, enabling to more accurately determine a risk factor from a vehicle's surrounding situation (scene). Particularly, in the present embodiment, the supervisory signals for learning include learning data for determining, as a risk factor, an object that is included in the map information image but is not included in the captured image (i.e., an object that is present in the driver's field of vision but cannot be visually identified).

Next, a risk factor determination processing program executed by the CPU 41 in the navigation device 1 according to the present embodiment will be described based on FIG. 7. FIG. 7 is a flowchart of the risk factor determination processing program according to the present embodiment. Here, the risk factor determination processing program is a program that is executed after turning on the vehicle's ACC, and determines a risk factor present around the vehicle based on a captured image captured by the exterior camera 19 and the three-dimensional map information 34 and outputs a result of the determination. Note that the risk factor determination processing program (FIG. 7) is executed in parallel with the aforementioned machine learning processing program (FIG. 2). Namely, while a risk factor is determined by the risk factor determination processing program (FIG. 7), more appropriate supervisory signals for learning (correct values) for determining a risk factor are set by the machine learning processing program (FIG. 2).

First, in the risk factor determination processing program, at S11, the CPU 41 obtains a vehicle's current location and orientation based on results of detection by the current location detecting part 11. Note that details are the same as those of S1 and thus are omitted.

Then, at S12, the CPU 41 obtains particularly three-dimensional map information 34 for an area around the vehicle's current location which is identified at the above-described S11 (e.g., an area within 300 m from the vehicle's current location) among the three-dimensional map information 34 stored in the map information DB 31.

Subsequently, at S13, the CPU 41 obtains a captured image captured recently by the exterior camera 19 from the captured-image DB 32. Note that the captured image captured by the exterior camera 19 is an image that captures the environment ahead in a vehicle's traveling direction, i.e., the environment ahead visually identified by the driver (driver's field of vision), to correspond to a start point of a driver's line of sight (eye point) and a driver's line-of-sight direction.

Thereafter, at S14, the CPU 41 obtains an image capturing range of the captured image obtained at the above-described S3. Note that details are the same as those of S4 and thus are omitted.

Then, at S15, the CPU 41 creates a bird's-eye-view image (map information image) that three-dimensionally represents a map of the same range as the image capturing range of the captured image obtained at the above-described S14 from the same direction as an image capturing direction of the captured image, using the three-dimensional map information 34 obtained at the above-described S12.

Thereafter, at S16, the CPU 41 inputs the captured image obtained at the above-described S13 and the map information image created at the above-described S15 to machine learning as input images with a plurality of channels. In addition, since the captured image is inputted to the machine learning as three-channel input images represented by three RGB colors, respectively, four-channel input images including the map information image are inputted. Note that in the present embodiment, particularly, machine learning (deep learning) using a convolutional neural network with a multilayer structure is used.

Note that in the present embodiment, particularly, machine learning (deep learning) using a convolutional neural network with a multilayer structure is used. Note also that the latest supervisory signals for learning (correct values) which are set by the aforementioned machine learning processing program (FIG. 2) are used. Note that the content of machine learning is described at S6 and thus the details thereof are omitted.

Then, at S17, the CPU 41 determines a risk factor present in the surrounding environment of the vehicle, based on a result of the machine learning at the above-described S16. As described above, in the present embodiment, by inputting the captured image and the map information image which are input targets in an overlapping manner using the same channel, it becomes possible to easily identify correlation between identical pixels (i.e., the same area around the vehicle), i.e., a differential area having differences between the captured image and the map information image. Then, a risk factor is determined particularly from feature portions extracted in the differential area by machine learning. By this, it becomes possible to further reduce processes related to the determination and extraction of a risk factor. Note that since the supervisory signals for learning include learning data for determining, as a risk factor, an object that is included in the map information image but is not included in the captured image (i.e., an object that is present in the driver's field of vision but cannot be visually identified), when a candidate for a risk factor such as a crossroad that cannot be visually identified by the driver is present in the surrounding environment of the vehicle, it becomes possible to accurately determine the crossroad as a risk factor based on the learning data such as the supervisory signals for learning.

For example, when the captured image 51 and the map information image 52 which are shown in FIG. 6 are inputted to machine learning, other vehicles that cover road outline lines and the road outline lines that disappear due to other vehicles are extracted as feature portions in the differential area 58. Then, in machine learning, it becomes possible to determine, based on the extracted feature portions, that a road corresponding to the road outline lines that disappear due to other vehicles is a crossroad which is a blind spot for the vehicle due to other vehicles, and is present as a risk factor. If accuracy is further improved by repeating learning, then it becomes also possible to determine a risk factor that the driver cannot notice.

Thereafter, the navigation device 1 outputs a result of the determination of a risk factor (i.e., an extracted risk factor). Specifically, when it is determined that a risk factor is present, guidance on the presence of the risk factor may be provided to the user, or vehicle control for avoiding the risk factor may be performed. For example, the guidance "watch ahead of the vehicle" is provided. In addition, if a type of the risk factor can be distinguished by machine learning, then guidance that more specifically identifies the risk factor (e.g., "watch a crossroad present in a blind spot ahead of the vehicle") may be provided. In addition, guidance on the location of the risk factor may also be provided. On the other hand, when vehicle control is performed, for example, deceleration control is performed. In addition, vehicle control can also be applied to a self-driving vehicle. In that case, for example, it is possible to perform control such as setting a travel route to avoid the risk factor.

As described in detail above, the navigation device 1 and a computer program executed by the navigation device 1 according to the present embodiment obtain a captured image that captures the surrounding environment of a vehicle (S13); obtain a map information image which is a map image that three-dimensionally represents a map and that represents the same range as an image capturing range of the captured image from the same direction as an image capturing direction of the captured image (S15); and extract, based on learning data, a risk factor that is present in the surrounding environment of the vehicle and that is not included in the captured image, by inputting the captured image and the map information image to machine learning as input images with a plurality of channels (S16 and S17). Thus, it becomes possible to more accurately determine a risk factor present in the surrounding environment of the vehicle.

In addition, in the conventional art (e.g., JP 2012-192878 A), during traveling of a vehicle, the locations and movement speeds of a preceding vehicle and an oncoming vehicle present around the vehicle need to be detected at all times using a camera, a sensor, and a communication device installed on the vehicle, and when the number of corresponding vehicles increases, there is a problem that the processing load for a determination of a risk factor becomes very heavy. On the other hand, in the present embodiment, the processing load for a determination of a risk factor can be reduced compared to the conventional case.

Note that the present invention is not limited to the above-described embodiment and various improvements and modifications may, of course, be made without departing from the spirit of the present invention.

For example, although in the present embodiment the three-dimensional map information 34 is information about a map image that three-dimensionally represents road outlines, the three-dimensional map information 34 may be map information representing information other than road outlines. For example, the map image may also represent the shapes of facilities, the section lines of roads, road signs, signs, etc. In that case, a factor other than a crossroad can also serve as a determination target for a risk factor. For example, by including information on section lines in the three-dimensional map information 34, a "section where a lane increases or decreases and which is present in a location where it is difficult to visually identify it from the vehicle" can be determined as a risk factor.

In addition, although in the present embodiment, as machine learning, particularly, machine learning (deep learning) using a convolutional neural network with a multilayer structure is used, other machine learning can also be used.

In addition, although in the present embodiment the machine learning processing program (FIG. 2) and the risk factor determination processing program (FIG. 7) are executed in parallel, the programs do not necessarily need to be executed simultaneously. For example, the machine learning processing program (FIG. 2) may be executed after executing the risk factor determination processing program (FIG. 7).

In addition, although in the present embodiment the machine learning processing program (FIG. 2) and the risk factor determination processing program (FIG. 7) are executed by the navigation device 1, those programs may be configured to be executed by an in-vehicle device other than the navigation device. In addition, instead of an in-vehicle device performing all processes, an external server may perform some of the processes.

In addition, although an implementation example in which the travel assistance device according to the present invention is embodied is described above, the travel assistance device can also have the following configurations, and in that case, the following advantageous effects are provided.

For example, a first configuration is as follows:
A travel assistance device includes surrounding environment imaging means (41) for obtaining a captured image (51) that captures the surrounding environment of a mobile unit; map information image obtaining means (41) for obtaining, as a map information image (52), a map image that three-dimensionally represents a map and that represents the same range as an image capturing range of the captured image from the same direction as an image capturing direction of the captured image; and risk factor extracting means (41) for extracting, based on learning data, a risk factor that is present in the surrounding environment of the mobile unit and that is not included in the captured image, by inputting the captured image and the map information image to machine learning as input images with a plurality of channels.

According to the travel assistance device having the above-described configuration, by inputting a map image that three-dimensionally represents a map and a captured image of an area around a mobile unit to machine learning as input images with a plurality of channels, it becomes possible to more accurately determine a risk factor present in the surrounding environment of the mobile unit, based on learning data.

In addition, a second configuration is as follows:
The risk factor extracting means (41) extracts a risk factor present in the surrounding environment of the mobile unit from a feature portion in a differential area having a difference between the captured image (51) and the map information image (52).

According to the travel assistance device having the above-described configuration, it becomes possible to reduce the processing load for a determination of a risk factor compared to the conventional case.

In addition, a third configuration is as follows:
The risk factor extracting means (41) extracts, as the feature portion, an object that is included in the map information image (52) but is not included in the captured image (51).

According to the travel assistance device having the above-described configuration, it becomes possible to easily extract, as a feature, an object that results in a risk factor present in a blind spot for the driver, i.e., a location where it cannot be visually identified by the driver.

In addition, a fourth configuration is as follows:
The map image is a map image that three-dimensionally represents a road outline, and when there is a road outline that is included in the map information image (52) but is not included in the captured image (51), the risk factor extracting means (41) determines a road corresponding to the outline as a risk factor.

According to the travel assistance device having the above-described configuration, it becomes possible to determine particularly a road present in a location that is a blind spot for the vehicle, as a risk factor. In addition, by using information that identifies road outlines as a three-dimensional map, it becomes possible to suppress the amount of information of the three-dimensional map.

In addition, a fifth configuration is as follows:
The risk factor extracting means (41) determines a risk factor present in the surrounding environment of the mobile unit by machine learning using a neural network with a multilayer structure.

According to the travel assistance device having the above-described configuration, by machine learning using a neural network with a multilayer structure, features of an image can be learned at a deeper level and the features can be recognized with very high accuracy, and thus, it becomes possible to more accurately determine a risk factor. Particularly, without the user side setting filters for extracting features, optimal filters can be set by learning.

### REFERENCE SIGNS LIST

1: Navigation device, 13: Navigation ECU, 19: Exterior camera, 31: Map information DB, 32: Captured-image DB, 33: Two-dimensional map information, 34: Three-dimensional map information, 41: CPU, 42: RAM, 43: ROM, 51: Captured image, 52: Map information image, 55: Convolutional CNN, and 57: Risk determination CNN

## Claims

1. A travel assistance device comprising:
surrounding environment imaging means for obtaining a captured image that captures a surrounding environment of a mobile unit;
map information image obtaining means for obtaining, as a map information image, a map image that three-dimensionally represents a map and that represents a same range as an image capturing range of the captured image from a same direction as an image capturing direction of the captured image; and
risk factor extracting means for extracting a risk factor based on learning data by inputting the captured image and the map information image to machine learning as input images with a plurality of channels, the risk factor being present in the surrounding environment of the mobile unit and being not included in the captured image.

2. The travel assistance device according to claim 1, wherein the risk factor extracting means extracts a risk factor present in the surrounding environment of the mobile unit from a feature portion in a differential area having a difference between the captured image and the map information image.

3. The travel assistance device according to claim 2, wherein the risk factor extracting means extracts, as the feature portion, an object that is included in the map information image but is not included in the captured image.

4. The travel assistance device according to claim 3,
wherein
the map image is a map image that three-dimensionally represents a road outline, and
when there is a road outline that is included in the map information image but is not included in the captured image, the risk factor extracting means extracts a road corresponding to the outline as the feature portion.

5. The travel assistance device according to any one of claims 1 to 4, wherein the risk factor extracting means extracts a risk factor present in the surrounding environment of the mobile unit by machine learning using a neural network with a multilayer structure.

6. A computer program for causing a computer to function as:
surrounding environment imaging means for obtaining a captured image that captures a surrounding environment of a mobile unit;
map information image obtaining means for obtaining, as a map information image, a map image that three-dimensionally represents a map and that represents a same range as an image capturing range of the captured image from a same direction as an image capturing direction of the captured image; and
risk factor extracting means for extracting a risk factor based on learning data by inputting the captured image and the map information image to machine learning as input images with a plurality of channels, the risk factor being present in the surrounding environment of the mobile unit and being not included in the captured image.
